# EUROPEAN PATENT SPECIFICATION

(11) **EP 3 680 977 B1**
(45) Date of publication and mention of the grant of the patent: **22.01.2025**
(21) Application number: 18873325.7
(22) Date of filing: 05.10.2018
(51) Int. Cl.: H01M 10/06, H01M 4/14, H01M 4/62, H01M 10/12, H01M 4/56, H01M 50/417, H01M 50/437, H01M 50/44, H01M 50/446, H01M 50/431, H01M 50/46, H01M 50/466, H01M 50/491, H01M 4/02

(54) **LEAD-ACID BATTERY**
BLEIAKKUMULATOR
BATTERIE DE STOCKAGE AU PLOMB

(30) Priority: 31.10.2017 JP 2017211359
(43) Date of publication of application: 15.07.2020
(73) Proprietor: GS Yuasa International Ltd., Kyoto-shi, Kyoto 601-8520 (JP)
(72) Inventor: KYO, Masaaki, Kyoto-shi Kyoto 601-8520 (JP); INAGAKI, Satoshi, Kyoto-shi Kyoto 601-8520 (JP); WADA, Hidetoshi, Kyoto-shi Kyoto 601-8520 (JP)
(74) Representative: Isarpatent
(86) International application number: PCT/JP2018/037299
(87) International publication number: WO 2019/087680

(56) References cited:
- WO-A1-2015/087749
- WO-A1-2016/121510
- JP-A- 2017 063 001
- JP-A- 2017 117 746
- JP-A- 2017 195 100
- No further relevant documents disclosed

## Description

### TECHNICAL FIELD

The present invention relates to a lead-acid battery.

### BACKGROUND ART

Lead-acid batteries are being used for various uses in addition to in-vehicle and industrial uses. The lead-acid battery includes a negative electrode plate, a positive electrode plate, a separator interposed between the negative electrode plate and the positive electrode plate, and an electrolyte solution. The negative electrode plate includes a current collector and a negative electrode material. The negative electrode material includes a negative active material, a carbon material, and the like.

Patent Document 1 proposes adding 0.1 to 3% by mass of carbon black to the negative active material.

Meanwhile, a separator having a rib may be used as the separator (Patent Document 2).

WO 2016/121510 A1 discloses a lead storage battery comprising a positive electrode, a negative electrode, an electrolytic solution and a separator, wherein the positive electrode has a positive electrode material containing a positive electrode active material, the negative electrode has a negative electrode material containing a negative electrode active material, and the electrolytic solution contains at least one selected from the group consisting of a potassium ion, an aluminum ion, a cesium ion and a phosphate ion.

JP 2017 195100 A refers to a lead storage battery, wherein a negative electrode material of a negative electrode plate includes lead powder prepared by a ball-mill method, a predetermined amount of scale-like graphite or carbon fiber (2.5% max), a predetermined amount of a barium sulphate (0.6-4%), and carbon black, lignin (0.2%) as a shrink-proofing agent, and a synthetic resin fiber (0.1%) as a reinforcement material; and wherein a positive electrode material of a positive electrode plate includes the lead powder, antimony trioxide (0.12% max), and a synthetic resin fiber (0.1%) as a reinforcement material.

### PRIOR ART DOCUMENTS

### PATENT DOCUMENTS

Patent Document 1: WO 2015/087749 A
Patent Document 2: JP-A-2014-203678

### SUMMARY OF THE INVENTION

### PROBLEMS TO BE SOLVED BY THE INVENTION

The lead-acid battery is sometimes used in a poor charged state called a partial state of charge (PSOC). For example, in a charge control vehicle or an idling stop (IS) vehicle, a lead-acid battery is used in the PSOC. Therefore, the lead-acid battery is required to be excellent in life performance in a cycle test under PSOC conditions (hereinafter referred to as PSOC life performance).

When carbon is added to the negative electrode material, sulfation is prevented, thereby improving the PSOC life performance to some extent. However, the carbon that has flowed into the electrolyte solution may block the pores of the separator to lower the low-temperature high rate performance.

### MEANS FOR SOLVING THE PROBLEMS

One aspect of the present invention relates to a lead-acid battery including: a positive electrode plate; a negative electrode plate; a separator interposed between the positive electrode plate and the negative electrode plate; and an electrolyte solution. The separator includes a rib on at least the negative electrode plate side, the negative electrode plate includes a negative electrode material, the negative electrode material contains carbon particles, the carbon particles include first carbon particles having a particle size of less than 32 µm, the first carbon particles include second carbon particles having a particle size smaller than an average pore size of the separator, and a content of the first carbon particles in the negative electrode material is 0.2% by mass or more and 2% by mass or less.

### ADVANTAGES OF THE INVENTION

In the lead-acid battery, excellent PSOC life performance can be ensured, and the decrease in low-temperature high rate performance can be prevented.

### BRIEF DESCRIPTION OF THE DRAWINGS

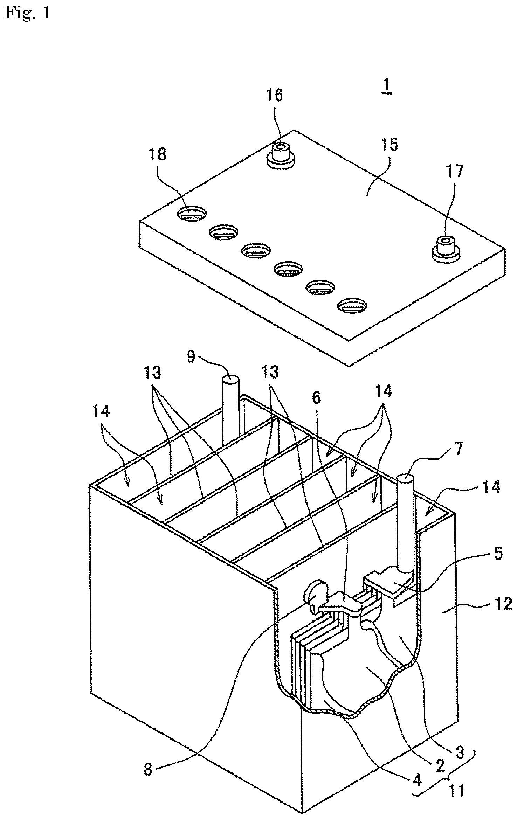

Fig. 1 is an exploded perspective view showing an external appearance and an internal structure of a lead-acid battery, which is partially cut off, according to one aspect of the present invention.

### MODES FOR CARRYING OUT THE INVENTION

A lead-acid battery according to the present invention includes a positive electrode plate, a negative electrode plate, a separator interposed between the positive electrode plate and the negative electrode plate, and an electrolyte solution. The separator includes a rib (first rib) on at least the negative electrode plate side. The negative electrode plate includes a negative electrode material, and the negative electrode material contains carbon particles. The carbon particles include first carbon particles having a particle size of less than 32 µm, wherein the first carbon particles are particles passing through a sieve having a nominal opening of 32 µm, as specified in JIS Z 8801-1: 2006, when wet sieving carbon particles in accordance with JIS Z8815: 1994, and the first carbon particles include second carbon particles having a particle size smaller than the average pore size d2 of the separator, wherein the average pore size d2 of the separator is obtained by mercury porosimetry. The content of the first carbon particles in the negative electrode material is 0.2% by mass or more and 2% by mass or less.

It has been found that when the negative electrode material contains the first carbon particles, the PSOC life performance is improved to some extent, but the low-temperature high rate performance (more specifically, a maintenance ratio of the low-temperature high rate performance) decreases. It is conceivable that this is because, when the first carbon particles include the second carbon particles having a particle size (primary particle size) smaller than the average pore size of the separator, the second carbon particles flow out into the electrolyte solution to block the pore. In the lead-acid battery, sulfuric acid is released from the negative electrode plate and the positive electrode plate during charge, but when the diffusivity of the electrolyte solution near the negative electrode plate is low, sulfuric acid stays near the negative electrode plate, and the sulfuric acid concentration increases.

According to the above aspect of the present invention, by providing the first rib on the negative electrode plate side of the separator, the diffusivity of the electrolyte solution near the negative electrode plate is improved, and hence the stratification of the electrolyte solution is decreased. Due to the improvement in diffusivity, the PSOC life performance can be further improved in addition to the PSOC life performance improvement effect of the first carbon particles. Further, even when the second carbon particles included in the first carbon particles flow out into the electrolyte solution, the provision of the first rib on the separator prevents the separator and the negative electrode plate from adhering to each other, whereby the pores of the separator are prevented from being blocked by the second carbon particles. Therefore, it is possible to prevent the decrease in low-temperature high rate performance (more specifically, a maintenance ratio of low-temperature high rate performance). Moreover, the stratification of the electrolyte solution is prevented even when the life is prolonged, so that it is possible to prevent the decrease in the specific gravity of the upper portion of the electrolyte solution, and prevent the occurrence of a permeation short circuit at the end of the life. When the diffusivity of the electrolyte solution near the negative electrode plate is improved by the first rib, the sulfuric acid is prevented from staying near the negative electrode plate, and an increase in the specific gravity of the electrolyte solution near the negative electrode plate is prevented, thereby improving the charge efficiency. It is thus possible to prevent the decrease in the electrolyte solution due to charge.

When the content of the first carbon particles in the negative electrode material is 0.2% by mass or more (up to 2% by mass), the second carbon particles having a small size and included in the first carbon particles easily flow out into the electrolyte solution during charge and discharge. However, according to the above aspect of the present invention, since the separator provided with the first rib is used, even when the second carbon particles included in the first carbon particles flow out, the pores of the separator are prevented from being blocked by the second carbon particles. It is thus possible to prevent the decrease in low-temperature high rate performance. Since the diffusivity of the electrolyte solution near the negative electrode plate is enhanced due to the presence of the first rib, high PSOC life performance can be ensured, and even in a condition where the permeation short circuit easily occurs due to a prolonged life, the stratification can be decreased to prevent the permeation short circuit.

A ratio R = d1/d2 of an average particle size d1 of the second carbon particles to an average pore size d2 of the separator is preferably 0.8 or less. When the ratio R is in such a range, the second carbon particles are likely to flow out into the electrolyte solution to block the pores of the separator. According to the above aspect of the present invention, since the first rib is provided on the separator, even when the second carbon particles included in the first carbon particles flow out into the electrolyte solution, the action of the first rib can prevent the pores of the separator from being blocked by the second carbon particles. Therefore, even when the ratio R is in the above range, it is possible to more effectively prevent the decrease in the maintenance ratio of the low-temperature high rate performance.

The average particle size d1 of the second carbon particles is, for example, 10 nm or more and 100 nm or less. When the second carbon particles included in the first carbon particles have such an average particle size, the second carbon particles easily flow out of the negative electrode plate into the electrolyte solution. According to the above aspect of the present invention, since the first rib is provided on the separator, even when the second carbon particles flow out into the electrolyte solution, the action of the first rib can prevent the pores of the separator from being blocked by the second carbon particles. It is thus possible to more preferably prevent the decrease in low-temperature high rate performance.

In the above aspect of the present invention, the second carbon particles preferably include carbon black. The carbon black easily flows out of the negative electrode plate into the electrolyte solution. According to the above aspect of the present invention, since the first rib is provided on the separator, even when the carbon black flows out into the electrolyte solution, the action of the first rib can prevent the pores of the separator from being blocked by the carbon black. It is thus possible to more preferably prevent the decrease in low-temperature high rate performance.

It is preferable that the separator further include a rib (second rib) on the positive electrode plate side as well. In this case, the oxidation degradation of the separator can be prevented.

The separator may have a bag shape. When a bag-shaped separator is used, the electrolyte solution easily stays, but by providing the first rib and the second rib, the diffusivity of the electrolyte solution increases, and the PSOC life performance can be further improved. Moreover, the effect of preventing the permeation short circuit is further enhanced. When the bag-shaped separator stores the positive electrode plate, the stratification of the electrolyte solution is easily prevented. When the bag-shaped separator stores the negative electrode plate, by the formation of the first rib in the bag, the diffusivity of the electrolyte solution in the bag is easily increased. Unlike the positive electrode current collector, the negative electrode current collector has a small extension during charge-discharge. Therefore, when the negative electrode plate is stored in the bag-shaped separator, the separator is prevented from breaking due to the extension of the current collector, and a short circuit can thus be prevented.

The lead-acid battery may include a fiber mat interposed between the positive electrode plate and the negative electrode plate. When the fiber mat is provided, the electrode plate is pressed by the fiber mat to decrease the amount of electrolyte solution around the electrode plate. In the above aspect of the present invention, by providing the first rib on at least the negative electrode plate side of the separator, even when the fiber mat is provided, the electrolyte solution can be held near the negative electrode plate, and the diffusivity of the electrolyte solution can be improved.

Hereinafter, the lead-acid battery according to the embodiment of the present invention will be described for each of the main components, but the present invention is not limited to the following embodiment.

### (Positive electrode plate)

There are a paste type and a clad type in the positive electrode plate of the lead-acid battery.

The paste-type positive electrode plate includes a positive electrode current collector and a positive electrode material. The positive electrode material is held in the positive electrode current collector. In the paste-type positive electrode plate, the positive electrode material is a material with the positive electrode current collector removed from the positive electrode plate. The positive electrode current collector may be formed similarly to the negative electrode current collector, and can be formed by casting lead or a lead alloy or processing a lead or lead alloy sheet.

The clad-type positive electrode plate includes a plurality of porous tubes, a spine inserted into each tube, a positive electrode material with which a spine inserted tube is filled, and a joint that joins the plurality of tubes. In the clad-type positive electrode plate, the positive electrode material is a material with the tube, the spine, and the joint removed from the positive electrode plate.

As a lead alloy used for the positive electrode current collector, a Pb-Ca-based alloy and a Pb-Ca-Sn-based alloy are preferred in terms of corrosion resistance and mechanical strength. The positive electrode current collector may have a lead alloy layer with a different composition, and a plurality of alloy layers may be provided. It is preferable to use a Pb-Ca-based alloy or a Pb-Sb-based alloy for the spine.

The positive electrode material contains a positive active material (lead dioxide or lead sulfate) that develops a capacity through an oxidation-reduction reaction. The positive electrode material may contain other additives if necessary.

A non-chemically converted paste-type positive electrode plate is obtained in such a manner that a positive electrode current collector is filled with a positive electrode paste, which is then cured and dried, according to the case of the negative electrode plate. Thereafter, a non-chemically converted positive electrode plate is chemically converted. The positive electrode paste is prepared by kneading lead powder, an additive, water, and sulfuric acid.

A clad-type positive electrode plate is formed by filling a spine inserted tube with lead powder or slurry-like lead powder, and joining a plurality of tubes with a joint.

### (Negative electrode plate)

The negative electrode plate of the lead-acid battery includes a negative electrode material. Normally, the negative electrode plate is made up of a negative electrode current collector and a negative electrode material. Note that the negative electrode material is obtained by removing the negative electrode current collector from the negative electrode plate. The negative electrode current collector may be formed by casting lead (Pb) or a lead alloy or may be formed by processing a lead or lead alloy sheet. Examples of the processing method include an expanding process and a punching process. The use of a negative electrode grid as the negative electrode current collector is preferred because the negative electrode material is easily supported.

The lead alloy used for the negative electrode current collector may be any of a Pb-Sb-based alloy, a Pb-Ca-based alloy, and a Pb-Ca-Sn-based alloy. The lead or lead alloys may further contain, as an additive element, at least one selected from the group consisting of Ba, Ag, Al, Bi, As, Se, Cu, and the like.

The negative electrode material contains carbon particles. The carbon particles normally have conductivity. Further, the negative electrode material contains a negative active material (lead or lead sulfate) that develops a capacity through an oxidation-reduction reaction. The negative electrode material may include an expander, barium sulfate, and the like, and may include other additives as necessary.

The negative active material in a charged state is spongy lead, whereas a non-chemically converted negative electrode plate is usually produced using lead powder.

Examples of the carbon particles include carbon black, graphite, hard carbon, and soft carbon. Examples of the carbon black include acetylene black, furnace black, channel black, and lamp black. As graphite, any carbon material including a graphite type crystal structure may be used, and any of artificial graphite and natural graphite may be used. The negative electrode material may contain one kind of these carbon particles, or may contain two or more kinds thereof.

The carbon particles include first carbon particles having a particle size of less than 32 µm, and the first carbon particles include second carbon particles having a particle size smaller than the average pore size of the separator. The carbon particles contained in the negative electrode material only need to include at least the first carbon particles, and may contain only the first carbon particles. The carbon particles may include the first carbon particles and carbon particles (third carbon particles) having a particle size of 32 µm or more.

The second carbon particles preferably include carbon black. The second carbon particles such as carbon black included in the first carbon particles easily flow out into the electrolyte solution, but even when the second carbon particles flow out into the electrolyte solution, the action of the first rib can prevent the pores of the separator from being blocked by the second carbon particles such as carbon black. With the first carbon particles including the second carbon particles such as carbon black, a more uniform conductive network is easily formed in the negative electrode material.

The content of the carbon particles contained in the negative electrode material is, for example, 0.2% by mass or more 3.0% by mass or less, and preferably 0.3% by mass or more 2.5% by mass or less. When the content of the carbon particles is in such a range, the conductive network is likely to spread while ensuring a high capacity.

The ratio of the first carbon particles to the carbon particles contained in the negative electrode material (total amount of carbon particles) is, for example, 10% by mass or more, and preferably 30% by mass or more. The ratio of the first carbon particles to the carbon particles contained in the negative electrode material (total amount of carbon particles) is 100% by mass or less, and may be 90% by mass or less. These lower and upper limits can be combined in a freely selectable manner.

The content of the first carbon particles in the negative electrode material is 0.2% by mass or more and 2% by mass or less. By using a negative electrode plate provided with a negative electrode material with a content of the first carbon particles in such a range and a separator provided with the first rib, the diffusivity of the electrolyte solution near the negative electrode plate is increased, and high PSOC life performance can be ensured. When the content of the first carbon particles in the negative electrode material is 0.2% by mass or more (up to 2% by mass), the second carbon particles included in the first carbon particles easily flow out into the electrolyte solution during charge and discharge. However, due to the presence of the first rib, the pores of the separator are prevented from being blocked by the outflowing second carbon particles. Hence the decrease in low-temperature high rate performance can be prevented. Further, by setting the content of the first carbon particles in the negative electrode material to 2% by mass or less, it is possible to prevent the negative electrode paste from being hardened and to prevent decreases in properties of application to the current collector and properties of filling the current collector. Further, even in a condition where a permeation short circuit easily occurs due to a prolonged life, the stratification is decreased due to the high diffusivity of the electrolyte solution, so that the occurrence of the permeation short circuit can be prevented. From the viewpoint that the effect of preventing the decrease in low-temperature high rate performance by the first rib is remarkably exhibited, the content of the first carbon particles in the negative electrode material is preferably 0.3% by mass or more and 2% by mass or less. When the content of the first carbon particles in the negative electrode material increases, the decreased amount of liquid during charge tends to increase. In such a case (e.g., when the content is 1% by mass or more and 2% by mass or less), the decreased amount of liquid can be decreased by using the separator provided with the first rib. From the viewpoint of decreasing the decreased amount of liquid during charge, the content of the first carbon particles in the negative electrode material is preferably set to 1% by mass or less (e.g., 0.2% by mass or more and 1% by mass or less, or 0.3% by mass or more and 1% by mass or less).

The average particle size d1 of the second carbon particles included in the first carbon particles (e.g., carbon black or the like) is preferably 100 nm or less, more preferably 60 nm or less. Although there is no particular lower limit, the average particle size d1 is preferably 10 nm or more, and may be 20 nm or more. These upper and lower limits can be combined in a freely selectable manner. When the average particle size of the second carbon particles is in such a range, the second carbon particles included in the first carbon particles easily flow out into the electrolyte solution and likely to block the pores of the separator. However, the use of the separator provided with the first rib can prevent blockage of the pores of the separator and prevent the decrease in low-temperature high rate performance.

The ratio of the second carbon particles included in the first carbon particles is preferably 60% by volume or more. When the ratio of the second carbon particles is in such a range, higher PSOC life performance can be ensured, and the high low-temperature high rate performance can be more easily ensured. Further, the ratio of the second carbon particles included in the first carbon particles is preferably 80% by volume or more. When the ratio of the second carbon particles is in such a range, it is possible to further enhance the effects of improving the PSOC life performance and the low-temperature high rate performance.

The third carbon particles preferably include carbon particles other than carbon black among the above-described carbon particles, and particularly preferably include graphite.

The ratio R (= d1/d2) of the average particle size (d1) of the second carbon particles to the average pore size (d2) of the separator is preferably 0.8 or less, and more preferably 0.5 or less. When the ratio R is in such a range, the second carbon particles are likely to block the pores of the separator, but the first rib of the separator can ensure the diffusivity of the electrolyte solution near the negative electrode plate and prevent the blockage of the pores of the separator. Accordingly, high PSOC life performance can be ensured, and the decrease in low-temperature high rate performance can be further prevented.

The content of the carbon particles and the first carbon particles contained in the negative electrode material, the average particle size of the second carbon particles, and the ratio of the second carbon particles can be obtained as follows.

A chemically converted lead-acid battery after full charge is disassembled, and a negative electrode plate is washed with water and dried to remove sulfuric acid, and then dried under vacuum (under pressure lower than atmospheric pressure). Next, an electrode material is collected from the negative electrode plate and crushed. 30 mL of a nitric acid aqueous solution with a concentration of 60% by mass is added to 5 g of the crushed sample, and heated at 70°C to dissolve lead as lead nitrate. To this mixture, 10 g of disodium ethylenediaminetetraacetate, 30 mL of aqueous ammonia with a concentration of 28% by mass, and 100 mL of water are further added, and heating is continued to dissolve soluble matter. Next, a sample collected by filtration is sieved through a sieve having an opening of 500 µm to remove components having a large size such as a reinforcing material, and the components that have passed through the sieve are collected as carbon particles.

At the time of wet sieving of the collected carbon particles with a sieve having an opening of 32 µm, when there are particles remaining on the sieve without passing through the sieve, these are defined as third carbon particles, and the particles passing through the sieve are defined as first carbon particles. Note that Japanese Industrial Standards (JIS) Z8815: 1994 is referred to for wet sieving.

Specifically, the carbon particles are placed on a sieve having a mesh size of 32 µm and sieved by gently shaking the sieve for 5 minutes while sprinkling ion-exchange water. The ion-exchange water is poured onto the third carbon particles remaining on the sieve to collect the particles from the sieve, and the particles are separated from the ion-exchange water by filtration. The first carbon particles that have passed through the sieve are collected by filtration using a nitrocellulose membrane filter (opening: 0.1 µm). The collected first and third carbon particles are each dried at a temperature of 110°C for two hours. As a sieve having an opening of 32 µm, a sieve provided with a sieve mesh having a nominal opening of 32 µm, as specified in JIS Z 8801-1: 2006, is used.

The first carbon particles that have passed through the sieve include many second carbon particles having small primary particle sizes. The average particle size of such primary particles corresponds to the average particle size d1 of the second carbon particles, as described later. Since such second carbon particles included in the first carbon particles have a particle size smaller than the average pore size d2 of the separator, the second carbon particles flow out into the electrolyte solution and cause the pores of the separator to be blocked.

The content of the first carbon particles in the negative electrode material is obtained by measuring the mass of the first carbon particles separated by the above procedure, and calculating the ratio (% by mass) of the mass in 5 g of the crushed sample. The content (% by mass) of the carbon particles in the negative electrode material is obtained by adding the ratio of the third carbon particles and the ratio of the first carbon particles obtained in accordance with the case of the first carbon particles.

The average particle size d1 of the second carbon particles is obtained by, from an electron micrograph of the first carbon particles, randomly selecting 100 primary particles having a primary particle size smaller than the average pore size d2 of the separator, measuring the maximum size of each primary particle (long axis size), and calculating an average value.

In the present specification, the fully charged state of the lead-acid battery is a state where, in the case of a flooded-type battery, in a water bath at 25°C, constant current charge is performed at a current of 0.2 CA to reach 2.5 V/cell, and then the constant current charge is further performed at 0.2 CA for two hours. In the case of a valve regulated battery, the fully charged state is a state where a constant current constant voltage charge of 2.23 V/cell is performed at 0.2 CAin an air tank at 25°C, and the charge is ended at the point when the charge current at the time of constant voltage charge becomes 1 mCA or lower.

In the present specification, 1 CA is a current value (A) having the same numerical value as the nominal capacity (Ah) of the battery. For example, when the battery has a nominal capacity of 30 Ah, 1 CAis 30 A, and 1 mCAis 30 mA.

The ratio (volume%) of the second carbon particles included in the first carbon particles can be obtained as follows from a scanning electron microscope (SEM) photograph of the first carbon particles separated above. First, in the SEM photograph, an arbitrary region of 100 µm in length × 100 µm in width is selected. For carbon particles contained in this region and having a clear outer edge of the particles, particles having a primary particle size smaller than the average pore size d2 of the separator are defined as second carbon particles, and particles having a primary particle size of the average pore size d2 or more are defined as the first carbon particles except for the second carbon particles. Then, for each carbon particle, an area of a region surrounded by the outer edge of the particle is calculated, and the total (total area) of the areas of the second carbon particles and the total (total area) of the areas of the first carbon particles except for the second carbon particles are calculated. The ratio (area%) of the total area of the second carbon particles to the total of the total area of the second carbon particles and the total area of the first carbon particles except for the second carbon particles is calculated. This area-based ratio is regarded as the volume-based ratio (volume%) of the second carbon particles included in the first carbon particles.

The negative electrode plate can be formed in such a manner that a negative electrode current collector is filled with a negative electrode paste, which is then cured and dried to prepare a non-chemically converted negative electrode plate, and then the non-chemically converted negative electrode plate is chemically converted. The negative electrode paste is prepared by adding water and sulfuric acid to the lead powder, the organic expander, and various additives if necessary, and mixing these. In the curing step, it is preferable to cure the non-chemically converted negative electrode plate at a temperature higher than room temperature and with high humidity.

The chemical conversion can be performed by charging the electrode group in a state where the electrode group including the non-chemically converted negative electrode plate is immersed in the electrolyte solution containing sulfuric acid in the container of the lead-acid battery. However, the chemical conversion may be performed before the lead-acid battery or the electrode group is assembled. The chemical conversion produces spongy lead.

### (Separator)

The separator includes a base made of a microporous film, and a rib protruding from at least one main surface of the base. The separator may include the rib protruding from one main surface of the base and a rib protruding from the other main surface of the base. The separator at least includes the rib protruding from one main surface and is disposed such that this rib is located on the negative electrode plate side. The rib located on the negative electrode plate side is called a first rib. When the separator includes the rib protruding from the other main surface of the base, this rib is disposed on the positive electrode plate side (i.e., so as to face the positive electrode plate). The rib located on the positive electrode plate side is called a second rib. The first rib can enhance the diffusivity of the electrolyte solution near the negative electrode plate, so that the PSOC life performance can be further improved and the permeation short circuit can be prevented. Further, since the increase in specific gravity of the electrolyte solution near the negative electrode plate is prevented, the charge efficiency is improved, so that the decrease in the amount of liquid during charge can be prevented.

The separator is formed using a polymer material (but different from fibers). At least the base is a porous sheet and can also be called a porous film. The average pore size of the base may be regarded as the average pore size of the separator. The separator may include a filler (e.g., a particulate filler such as silica, and/or a fibrous filler) that is dispersed in a matrix formed using a polymer material. The separator is preferably made of a polymer material having acid resistance. As such a polymer material, a polyolefin such as polyethylene or polypropylene is preferred.

Note that the average pore size of the separator, the average thickness of the base, the average height of the ribs, and the average pitch of the ribs, to be described below, are assumed to be obtained for the separator taken out of the battery, washed, and dried, similarly to the above.

The average pore size d2 of the separator is, for example, 0.03 µm or more and 0.5 µm or less, preferably 0.05 µm or more and 0.3 µm or less, and more preferably 0.07 µm or more and 0.3 µm or less. When the average pore size is in such a range, both low electric resistance and excellent short-circuit resistance can be achieved, which is advantageous.

The average pore size d2 is obtained by mercury porosimetry. More specifically, the separator is put into a measurement container, which is evacuated and then filled with mercury by applying pressure. A pore distribution is obtained from the relationship between the pressure at this time and the volume of mercury pushed into the separator, and from this pore distribution, the average pore size d2 is obtained. For measurement of the average pore size, an automatic porosimeter (Autopore IV9505) manufactured by Shimadzu Corporation is used.

The average thickness of the base is, for example, 100 µm or more and 300 µm or less, and preferably 150 µm or more and 250 µm or less. When the average thickness of the base is in such a range, the height of the first rib, as well as the height of the second rib if necessary, can be easily ensured while the capacity is kept high.

The average thickness of the base is obtained by measuring the thickness of the base at five freely selected locations in a cross-sectional photograph of the separator and averaging the measured thickness.

The first rib is formed on the surface of the separator facing the negative electrode plate. The average height of the first rib is, for example, 0.05 mm or more, and preferably 0.07 mm or more. When the average height of the first rib is in such a range, the electrolyte solution is more easily diffused. From the viewpoint of ensuring a high capacity, the average height of the first rib is, for example, 0.40 mm or less, and preferably 0.20 mm or less. Any combination of these lower and upper limits is possible. The separator is preferably formed with the first rib at such an average height in at least a region facing the negative electrode plate (preferably, a region where the negative electrode material is present). For example, the first rib having such an average height is preferably formed in 70% or more of the area of the region of the separator facing the negative electrode plate.

Note that the height of the first rib refers to a distance from one main surface of the base to the top of the first rib at a predetermined position of the first rib. In a case where the main surface of the base is not flat, the height of the first rib is assumed to be the distance from the highest position of one main surface of the base to the top of the first rib at a predetermined position of the first rib when the separator is placed flat with the first rib side facing up. The average height of the first ribs is obtained by averaging the heights of the first rib measured at ten freely selected locations of the first ribs on one main surface of the base.

The pattern of the first rib on one main surface of the base is not particularly limited, and the first rib may be formed at random or may be formed in a stripe shape, a curved shape, a grid shape, or the like. From the viewpoint of making the electrolyte solution more easily diffused, it is preferable to form a plurality of first ribs on one main surface of the base so as to be arranged in stripes. The orientation of the stripe-shaped first ribs is not particularly limited, and for example, the plurality of first ribs may be formed along the height direction or the width direction of the negative electrode plate. A difference is likely to be produced in specific gravity of the electrolyte solution between the upper and lower portions of the electrode plate, it is thus preferable to form the plurality of first ribs in a stripe shape along the height direction of the negative electrode plate from the viewpoint of further increasing the diffusivity of the electrolyte solution.

Note that a lug for extracting current from an electrode group is usually formed at one end of each of the negative electrode plate and the positive electrode plate. The vertical direction of the negative electrode plate or the positive electrode plate with the lug directed upward is referred to as the height direction of the negative electrode plate or the positive electrode plate. The width direction of the negative electrode plate or the positive electrode plate is a direction orthogonal to the height direction and crossing the main surface of the negative electrode plate or the positive electrode plate.

The average pitch of the stripe-shaped or grid-shaped first ribs is, for example, 0.3 mm or more and 10 mm or less, and preferably 0.5 mm or more and 5 mm or less. When the separator includes a region in which the first ribs are formed at an average pitch in such a range, the effect of improving the diffusivity of the electrolyte solution near the negative electrode plate is easily obtained. The separator is preferably formed with the first ribs at such an average pitch in a region facing the negative electrode plate (preferably, a region where the negative electrode material is present). For example, the first ribs having such an average pitch are preferably formed in 70% or more of the area of the region of the separator facing the negative electrode plate. In a region not facing the negative electrode plate or a region where the negative electrode material is not present, such as the end of the separator, the first rib may or may not be formed, and a plurality of first ribs may be formed densely (e.g., at an average pitch of 0.5 mm or more and 5 mm or less).

Note that the pitch of the first ribs is the distance between the tops of the adjacent first ribs (more specifically, the distance between the centers of the adjacent first ribs in a direction crossing the first ribs).

The average pitch of the first ribs is obtained by averaging the pitches of the first ribs measured at ten freely selected locations. When the first ribs are densely formed in the region of the separator not facing the negative electrode plate or the region facing a region where the negative electrode material of the negative electrode plate is not present, the average pitch may be calculated excluding this region. The average pitch of such partially densely formed first ribs can be calculated for this region, similarly to the above.

The second rib is formed on the surface of the separator facing the positive electrode plate. The average height of the second rib is, for example, 0.3 mm or more, and preferably 0.4 mm or more. When the average height of the second rib is within such a range, the oxidation degradation of the separator is easily prevented. From the viewpoint of ensuring a high capacity, the average height of the second rib is, for example, 1.0 mm or less, and may be 0.7 mm or less. Any combination of these lower and upper limits is possible. The separator is preferably formed with the second rib at such an average height in at least a region facing the positive electrode plate (preferably, a region where the positive electrode material is present). For example, the second rib having such an average height is preferably formed in 70% or more of the area of the region of the separator facing the positive electrode plate.

The average height of the second rib is obtained according to the case of the first rib. The height of the second rib refers to a distance from the other main surface of the base to the top of the second rib at a predetermined position of the second rib, according to the case of the first rib

The pattern and the orientation of the second rib are not particularly limited and may be selected, for example, from those described for the first rib. The average pitch of the stripe-shaped or grid-shaped second rib is, for example, 1 mm or more and 15 mm or less, and preferably 5 mm or more and 10 mm or less. When the separator includes a region in which the second ribs are formed at an average pitch in such a range, the effect of preventing the oxidation degradation of the separator is further enhanced. The separator is preferably formed with the second ribs at such an average pitch in a region facing the positive electrode plate (preferably, a region where the positive electrode material is present). For example, the second ribs having such an average pitch are preferably formed in 70% or more of the area of the region of the separator facing the positive electrode plate. In a region not facing the positive electrode plate or a region facing a region where the positive electrode material of the positive electrode plate is not present, such as the end of the separator, the second rib may or may not be formed, and a plurality of second ribs may be formed densely (e.g., at an average pitch of 0.5 mm or more and 5 mm or less).

Note that the pitch of the second ribs is the distance between the tops of the adjacent second ribs (more specifically, the distance between the centers of the adjacent second ribs in a direction crossing the second rib). The average pitch of the second ribs can be calculated according to the average pitch of the first ribs.

The sheet-shaped separator may be sandwiched between the negative electrode plate and the positive electrode plate, or by storing the negative electrode plate or the positive electrode plate in the bag-like separator, the separator may be interposed between the negative electrode plate and the positive electrode plate. When a bag-shaped separator is used, the electrolyte solution is hardly diffused, but the provision of the first rib and the second rib improves the diffusivity. When the negative electrode plate is stored in the bag-shaped separator, the first rib easily enhances the diffusivity of the electrolyte solution near the negative electrode plate, and prevents separator breakage due to the extension of the current collector, thereby enabling prevention of a short circuit caused by the separator breakage. When the positive electrode plate is stored in the bag-shaped separator, the stratification of the electrolyte solution can be prevented.

The separator is obtained by, for example, extruding a resin composition containing a pore-forming additive (a solid pore-forming additive such as a polymer powder, and/or a liquid pore-forming additive such as an oil), a polymer material, and the like to be molded into a sheet shape, and then removing the pore-forming additive to form pores in the matrix of the polymer material. The rib may be formed, for example, at the time of the extrusion molding, or may be formed by performing the press with a roller having a groove corresponding to the rib after the molding into the sheet shape or the removal of the pore-forming additive. When a filler is used, the filler is preferably added to the resin composition.

### (Electrolyte solution)

An aqueous solution containing sulfuric acid is used as the electrolyte solution. The electrolyte solution may be gelled if necessary.

The negative electrode material contains the first carbon particles, and the second carbon particles having a small particle size and included in the first carbon particles flow out into the electrolyte solution, so that the second carbon particles are contained in the electrolyte solution. Although the second carbon particles may be contained in the electrolyte solution even in a battery in an initial state (e.g., in a chemically converted and fully charged state), the outflow of the second carbon particles becomes remarkable by repeating charge and discharge

The electrolyte solution may contain an additive used for a lead-acid battery, if necessary.

The specific gravity at 20°C of the electrolyte solution in a fully charged lead-acid battery after chemical conversion is, for example, 1.10 g/cm³ or more and 1.35 g/cm³ or less.

### (Fiber mat)

The lead-acid battery may further include a fiber mat interposed between the positive electrode plate and the negative electrode plate. When the fiber mat is disposed, the electrode plate is pressed by the fiber mat, and it becomes difficult to hold the electrolyte solution around the electrode plate. In the above aspect of the present invention, the first rib is provided on the separator, so that the electrolyte solution can be easily ensured near the negative electrode plate, and high diffusivity of the electrolyte solution can be ensured.

The fiber mat is different from the separator and is made of a sheet-shaped fiber aggregate. As such a fiber aggregate, a sheet in which fibers insoluble in the electrolyte solution are entangled is used. Such sheets include, for example, nonwoven fabrics, woven fabrics, knits, and the like.

As the fibers, it is possible to use glass fibers, polymer fibers (polyolefin fibers, acrylic fibers, polyester fibers such as polyethylene terephthalate fibers, etc.), pulp fibers, and the like. Among the polymer fibers, polyolefin fibers are preferred.

The fiber mat may contain components in addition to the fibers, such as an acid-resistant inorganic powder and a polymer as a binder. As the inorganic powder, it is possible to use silica powder, glass powder, diatomaceous earth, and the like. However, the fiber mat is mainly composed of the fibers. For example, 60% by mass or more of the fiber mat is formed using the fibers.

The fiber mat may be disposed between the negative electrode plate and the positive electrode plate. With the separator being also disposed between the negative electrode plate and the positive electrode plate, the fiber mat may be provided between the negative electrode plate and the positive electrode plate, for example, between the negative electrode plate and the separator, and/or between the separator and the positive electrode plate. From the viewpoint of preventing the stratification of the electrolyte solution, the fiber mat is preferably disposed so as to be in contact with the negative electrode plate. In addition, from the viewpoint of preventing softening and falling of the positive active material, it is preferred that the fiber mat be disposed so as to be in contact with the positive electrode plate. From the viewpoint of enhancing an effect of preventing the softening and falling, it is preferable to dispose the fiber mat in the state of being pressed against the positive electrode plate, but in this case, the electrolyte solution near the negative electrode plate is likely to be insufficient. In the present embodiment, since the first ribs are provided on the negative electrode plate side of the separator, even when the fiber mat is disposed on the positive electrode plate side, the electrolyte solution can be ensured near the negative electrode plate.

Fig. 1 shows an external view of an example of a lead-acid battery according to an embodiment of the present invention.

A lead-acid battery 1 includes a container 12 storing an electrode group 11 and an electrolyte solution (not shown). The inside of the container 12 is partitioned into a plurality of cell chambers 14 by partitions 13. In each cell chamber 14, one electrode group 11 is stored. The opening of the container 12 is closed with a lid 15 having a negative electrode terminal 16 and a positive electrode terminal 17. The lid 15 is provided with a vent plug 18 for each cell chamber. At the time of water addition, the vent plug 18 is removed, and a water addition liquid is supplied. The vent plug 18 may have a function of discharging gas generated in the cell chamber 14 to the outside of the battery.

The electrode group 11 is configured by stacking a plurality of negative electrode plates 2 and positive electrode plates 3 with a separator 4 interposed therebetween. Here, the bag-shaped separator 4 storing the negative electrode plate 2 is shown, but the form of the separator is not particularly limited. In the cell chamber 14 located at one end of the container 12, a negative electrode shelf 6 for connecting the plurality of negative electrode plates 2 in parallel is connected to a through-connector 8, and a positive electrode shelf 5 for connecting the plurality of positive electrode plates 3 in parallel is connected to a positive electrode pole 7. The positive electrode pole 7 is connected to the positive electrode terminal 17 outside the lid 15. In the cell chamber 14 located at the other end of the container 12, the negative electrode pole 9 is connected to the negative electrode shelf 6, and the through-connector 8 is connected to the positive electrode shelf 5. The negative electrode pole 9 is connected to the negative electrode terminal 16 outside the lid 15. Each through-connector 8 passes through a through-hole provided in the partition 13 and connects the electrode groups 11 of the adjacent cell chambers 14 in series.

### [Example]

Hereinafter, the present invention will be specifically described based on examples and comparative examples, but the present invention is not limited to the following examples.

### <<Lead-acid batteries A1 to A6 and C1>>

### (1) Preparation of negative electrode plate

A negative electrode paste was obtained by mixing lead powder, water, diluted sulfuric acid, carbon black, and an organic expander. A mesh of an expanded grid made of a Pb-Ca-Sn-based alloy as a negative electrode current collector was filled with the negative electrode paste, which was then cured and dried to obtain a non-chemically converted negative electrode plate. Sodium lignin sulfonate was used as the organic expander. The additive amount of carbon black was adjusted so that the content thereof contained in 100% by mass of the negative electrode material became the value shown in Table 1. The additive amount of the organic expander was adjusted so that the contents thereof contained in 100% by mass of the negative electrode material was 0.2% by mass, and the carbon black was then mixed into the negative electrode paste.

### (2) Preparation of positive electrode plate

A positive electrode paste was prepared by mixing lead powder, water, and sulfuric acid. A mesh of an expanded grid made of a Pb-Ca-Sn-based alloy as a positive electrode current collector was filled with the positive electrode paste, which was then cured and dried to obtain a non-chemically converted positive electrode plate.

### (3) Preparation of lead-acid battery

Each non-chemically converted negative electrode plate was stored into a bag-shaped separator formed using a polyethylene microporous film, and an electrode group was formed using seven non-chemically converted negative electrode plates and six non-chemically converted positive electrode plates per cell. The separator had a first rib inside the bag and a second rib outside the bag. The separator was provided with a plurality of stripe-shaped first ribs and a plurality of second ribs, and the plurality of first ribs and the plurality of second ribs were formed along the height directions of the negative electrode plate and the positive electrode plate, respectively. The average height of the first ribs was 0.1 mm, and the pitch of the first ribs in the region facing the negative electrode plate was 1 mm. The average height of the second ribs was 0.4 mm, and the average pitch of the second ribs in a region facing the positive electrode plate was 10 mm. The average thickness of the base of the separator was 0.2 mm. The average height of the ribs of the separator, the average thickness of the base, and the average pitch of the ribs are values obtained for the separator before the preparation of the lead-acid battery. However, those values were almost the same as values obtained by measuring the separator after the preparation of the lead-acid battery by the procedure described above.

The electrode group was inserted into a container made of polypropylene, the container was filled with an electrolyte solution, and chemical conversion was performed in the container, to assemble flooded-type lead-acid batteries A1 to A6 and C1 each having a nominal voltage of 12 V and a nominal capacity of 40 Ah (20-hour rate). As the electrolyte solution, an aqueous solution containing sulfuric acid and having a specific gravity of 1.28 at 20°C was used.

For the chemically converted lead-acid battery after full charge, the average particle size d1 of the second carbon particles (carbon black) contained in the negative electrode material and the average pore size d2 of the separator were obtained by the procedure described above, to be 50 nm and 0.1 µm, respectively, and the ratio R = d1/d2 was 0.5. The content of the first carbon particles in the negative electrode material obtained by the procedure described above was almost the same as the additive amount of the carbon black at the time of preparing the negative electrode paste. Also, the average pore size d2 of the separator was almost the same as the average pore size of the separator before assembly of the battery. The ratio of the second carbon particles in the first carbon particles obtained by the procedure described above was about 100% by volume.

### <<Lead-acid batteries B1 to B7>>

A bag-shaped separator having no first rib was used. Except for this, lead-acid batteries B1 to B7 were assembled similarly to lead-acid batteries C1 and A1 to A6.

### [Evaluation 1: PSOC life performance]

The lead-acid battery was charged and discharged under the idling stop condition in accordance with SBA S 0101: 2014. Specifically, (a) to (c) below were repeated as one cycle at 25°C until the discharge end voltage became 7.2 V or less, and the number of cycles at this time was obtained. However, in the middle, the charge-discharge cycle is stopped when the number of cycles is 18000, and after a low-temperature high rate performance discharge test to be described later is performed, the battery is charged at a constant voltage of 14.5 V for 16 hours, and again, the following charge and discharge of (a) to (c) was repeated. The PSOC life performance was evaluated by the ratio at the time when the number of cycles in the lead-acid battery B1 was set to 100. At the time of charge and discharge, the operation was suspended for 40 to 48 hours every 3600 cycles.
(a) Discharge 1: discharge is performed at a current value of 32 A for 59 seconds.
(b) Discharge 2: discharge is performed at a current value of 300 A for one second.
(c) Charge: charge is performed at a limited current of 100 A and a voltage of 14.0 V for 60 seconds.

### [Evaluation 2: Low-temperature high rate discharge test]

Before and during the charge-discharge cycle test of Evaluation 1, a high rate discharge test at -15°C was performed in accordance with JIS D 5301: 2006. In the high rate discharge test, specifically, the lead-acid battery was allowed to stand in a cold chamber at a temperature of -15°C ± 1°C for at least 16 hours. Next, the discharge was performed at a discharge current (150 A) specified in JIS D5301: 2006 until a terminal voltage reached 1.0 V per cell at -15°C, and a discharge time (second) at this time was obtained. The discharge times before and after the PSOC life test were defined as t0 and t1, respectively, and the ratio t1/t0 was calculated to obtain the maintenance ratio of the low-temperature high rate performance. The ratio of the maintenance ratio, at the time when the maintenance ratio of the lead-acid battery B1 was set to 100, was calculated, and based on the calculated ratio, the maintenance ratio of the low-temperature high rate performance was evaluated.

### [Evaluation 3: Permeation short circuit]

The lead-acid battery after being evaluated in Evaluation 1 was disassembled, the separator was taken out, and the presence or absence of a permeation mark of lead was confirmed.

### [Evaluation 4: decreased amount of liquid]

A light-load life test was performed in accordance with JIS D 5301: 2006, and the decreased amount of liquid of the electrolyte solution after the test, compared to that before the test, was obtained. However, the test temperature was set to 75°C. Specifically, the lead-acid battery was discharged at 75°C for 4 minutes at a discharge current (25 A) specified in JIS D 5301: 2006, and then charged at 75°C at a voltage of 14.8 V for 10 minutes. This cycle of discharge and charge was repeated 480 times, and the lead-acid battery was left for 56 hours. Thereafter, the cycle of discharge and charge was further repeated 480 times, and the lead-acid battery was left for 56 hours. The mass of the lead-acid battery after the test was measured and subtracted from the mass before the test to obtain the decreased amount of liquid of the electrolyte solution. The decreased amount of liquid was represented by a ratio at the time when the decreased amount of liquid in the lead-acid battery B1 was set to 100.

Table 1 shows the results of the lead-acid batteries A1 to A6, C1 and B1 to B7.

**[Table 1]**

| | First rib | Content of first carbon particles in negative electrode material (% by mass) | PSOC life performance | Maintenance ratio of low-temperature high rate performance | Permeation mark | Decreased amount of liquid |
|---|---|---|---|---|---|---|
| B1 | Not included | 0.1 | 100 | 100 | No | 100 |
| B2 | | 0.2 | 114 | 94 | Yes | 102 |
| B3 | | 0.3 | 119 | 92 | Yes | 106 |
| B4 | | 0.5 | 123 | 92 | Yes | 112 |
| B5 | | 1 | 125 | 88 | Yes | 125 |
| B6 | | 1.5 | 125 | 84 | Yes | 139 |
| B7 | | 2 | 124 | 86 | Yes | 146 |
| C1 | Included | 0.1 | 103 | 100 | No | 79 |
| A1 | | 0.2 | 120 | 100 | No | 80 |
| A2 | | 0.3 | 125 | 102 | No | 84 |
| A3 | | 0.5 | 131 | 102 | No | 88 |
| A4 | | 1 | 130 | 98 | No | 98 |
| A5 | | 1.5 | 130 | 98 | No | 110 |
| A6 | | 2 | 130 | 98 | No | 115 |

As shown in Table 1, in the lead-acid battery C1 in which the content of the first carbon particles in the negative electrode material is 0.1% by mass and the separator provided with the first rib is provided, as compared to the lead-acid battery B1, the effect of improving the PSOC life performance produced due to the presence of the first rib is low, and the effect of improving the low-temperature high rate performance is not obtained at all.

In contrast, the content of the first carbon particles in the negative electrode material is 0.2% by mass or more and 2% by mass or less, and in the lead-acid batteries A1 to A6 using the separators provided with the first rib, the PSOC life performance has been greatly improved due to the presence of the first rib as compared to the lead-acid batteries B2 to B7. In particular, the lead-acid batteries A2 to A7 have a higher PSOC life performance than the lead-acid battery A1 having a smaller content of the first carbon particles.

When the content of the first carbon particles in the negative electrode material is 0.2% by mass or more (up to 2% by mass), the maintenance ratio of the low-temperature high rate performance tends to decrease (lead-acid batteries B2 to B7). It is conceivable that this is because, when the content of the first carbon particles is 0.2% by mass or more, the outflow of the second carbon particles having a small particle size, included in the first carbon particles, into the electrolyte solution becomes remarkable. In contrast, even with the content of the first carbon particles being as above, the provision of the first rib prevents the decrease in the maintenance ratio of the low-temperature high rate performance (lead-acid batteries A1 to A6). It is conceivable that this is because the first rib prevents the blockage of the pores of the separator by the second carbon particles. The effect of preventing the decrease in the maintenance ratio of the low-temperature high rate performance is particularly remarkable when the content of the first carbon particles in the negative electrode material is 0.3% by mass or more.

Further, in the lead-acid batteries C1 and B1, no permeation mark is confirmed, and the effect of preventing the permeation short circuit by the first rib is not obtained when the content of the first carbon particles is 0.1% by mass. On the other hand, when the content of the first carbon particles in the negative electrode material is 0.2% by mass or more, in the case of using the separator provided with no first rib, a permeation mark is observed (lead-acid batteries B2 to B7). In contrast, in the lead-acid batteries A1 to A6, even when the content of the first carbon particles is in the same range, the provision of the first rib has prevented the permeation and precipitation of lead into the separator.

Moreover, in the lead-acid batteries A1 to A6, the decreased amount of liquid during charge is decreased significantly as compared to the lead-acid batteries B2 to B7. In particular, when the content of the first carbon particles in the negative electrode material is 1% by mass or less, the decreased amount of liquid can be decreased to less than 100. As shown in Table 1, the decreased amount of liquid tends to increase when the content of the first carbon particles in the negative electrode material increases. However, even when the content of the first carbon particles is large (e.g., 1% by mass or more), the decreased amount of liquid during charge can be decreased due to the presence of the first rib (comparison of lead-acid batteries B5 to B7 and A4 to A6).

### INDUSTRIAL APPLICABILITY

The lead-acid battery according to one aspect of the present invention is applicable to a valve regulated lead-acid battery and a flooded-type lead-acid battery, and can be suitably used as a power source for starting an automobile, a motorcycle, or the like.

### DESCRIPTION OF REFERENCE SIGNS

1: lead-acid battery
2: negative electrode plate
3: positive electrode plate
4: separator
5: positive electrode shelf
6: negative electrode shelf
7: positive electrode pole
8: through-connector
9: negative electrode pole
11: electrode group
12: container
13: partition
14: cell chamber
15: lid
16: negative electrode terminal
17: positive electrode terminal
18: vent plug

## Claims

1. A lead-acid battery comprising:
a positive electrode plate;
a negative electrode plate;
a separator interposed between the positive electrode plate and the negative electrode plate; and
an electrolyte solution,
wherein
the separator includes a rib on at least the negative electrode plate side,
the negative electrode plate includes a negative electrode material,
the negative electrode material contains carbon particles,
the carbon particles include first carbon particles having a particle size of less than 32 µm, wherein the first carbon particles are particles passing through a sieve having a nominal opening of 32 µm, as specified in JIS Z 8801-1: 2006, when wet sieving carbon particles in accordance with JIS Z8815: 1994,
the first carbon particles include second carbon particles having a particle size smaller than an average pore size d2 of the separator, wherein the average pore size d2 of the separator is obtained by mercury porosimetry, and
a content of the first carbon particles in the negative electrode material is 0.2% by mass or more and 2% by mass or less.

2. The lead-acid battery according to claim 1, wherein a ratio R = d1/d2 of an average particle size d1 of the second carbon particles, obtained by, from an electron micrograph of the first carbon particles, randomly selecting 100 primary particles having a primary particle size smaller than the average pore size d2 of the separator, measuring a maximum size of each primary particle, and calculating an average value, to an average pore size d2 of the separator is 0.8 or less.

3. The lead-acid battery according to claim 1 or 2, wherein the average particle size d1 of the second carbon particles, obtained by, from an electron micrograph of the first carbon particles, randomly selecting 100 primary particles having a primary particle size smaller than the average pore size d2 of the separator, measuring a maximum size of each primary particle, and calculating an average value, is 10 nm or more and 100 nm or less.

4. The lead-acid battery according to any one of claims 1 to 3, wherein the second carbon particles include carbon black.

5. The lead-acid battery according to any one of claims 1 to 4, wherein the separator has a bag shape.

6. The lead-acid battery according to claim 5, wherein the separator stores the negative electrode plate.

7. The lead-acid battery according to claim 5, wherein the separator stores the positive electrode plate.

8. The lead-acid battery according to any one of claims 1 to 7, wherein the rib is formed along a height direction of the negative electrode plate, wherein a vertical direction of the negative electrode plate or the positive electrode plate with a lug directed upward is referred to as the height direction of the negative electrode plate or the positive electrode plate.

9. The lead-acid battery according to any one of claims 1 to 8, wherein a fiber mat is interposed between the positive electrode plate and the negative electrode plate.

## Patentansprüche

1. Bleiakkumulator, umfassend:
eine Positivelektrodenplatte;
eine Negativelektrodenplatte;
einen Separator, eingefügt zwischen der Positivelektrodenplatte und der Negativelektrodenplatte; und
eine Elektrolytlösung,
wobei
der Separator eine Rippe auf zumindest der Negativelektrodenplattenseite aufweist,
die Negativelektrodenplatte ein Negativelektrodenmaterial aufweist,
das Negativelektrodenmaterial Kohlenstoffpartikel aufweist,
die Kohlenstoffpartikel erste Kohlenstoffpartikel mit einer Teilchengröße von kleiner als 32 µm aufweisen, wobei die ersten Kohlenstoffpartikel Partikel sind, die durch ein Sieb mit einer Nennöffnung von 32 µm, wie spezifiziert in JIS Z 8801-1: 2006, beim Nasssieben von Kohlenstoffpartikeln gemäß JIS Z 8815: 1994 hindurchgehen, die ersten Kohlenstoffpartikel zweite Kohlenstoffpartikel mit einer Teilchengröße, die kleiner als eine mittlere Porengröße d2 des Separators ist, aufweisen, wobei die mittlere Porengröße d2 des Separators durch Quecksilberporosimetrie erhalten wird, und
ein Anteil der ersten Kohlenstoffpartikel in dem Negativelektrodenmaterial 0,2 Masse-% oder mehr und 2 Masse-% oder weniger beträgt.

2. Bleiakkumulator nach Anspruch 1, wobei ein Verhältnis R = d1/d2 von einer mittleren Teilchengröße d1 der zweiten Kohlenstoffpartikel, die aus einer elektronenmikroskopischen Aufnahme der ersten Kohlenstoffpartikel durch zufälliges Auswählen von 100 Primärpartikeln mit einer Primärteilchengröße, die kleiner als die mittlere Porengröße d2 des Separators ist, Messen einer maximalen Größe jedes Primärpartikels und Berechnen eines Mittelwertes erhalten wird, zu einer mittleren Porengröße d2 des Separators 0,8 oder weniger beträgt.

3. Bleiakkumulator nach Anspruch 1 oder 2, wobei die mittlere Teilchengröße d1 der zweiten Kohlenstoffpartikel, die aus einer elektronenmikroskopischen Aufnahme der ersten Kohlenstoffpartikel durch zufälliges Auswählen von 100 Primärpartikeln mit einer Primärteilchengröße, die kleiner als die mittlere Porengröße d2 des Separators ist, Messen einer maximalen Größe jedes Primärpartikels und Berechnen eines Mittelwertes erhalten wird, 10 nm oder mehr und 100 nm oder weniger beträgt.

4. Bleiakkumulator nach einem der Ansprüche 1 bis 3, wobei die zweiten Kohlenstoffpartikel Ruß aufweisen.

5. Bleiakkumulator nach einem der Ansprüche 1 bis 4, wobei der Separator eine Taschenform aufweist.

6. Bleiakkumulator nach Anspruch 5, wobei der Separator die Negativelektrodenplatte aufnimmt.

7. Bleiakkumulator nach Anspruch 5, wobei der Separator die Positivelektrodenplatte aufnimmt.

8. Bleiakkumulator nach einem der Ansprüche 1 bis 7, wobei die Rippe entlang einer Höhenrichtung der Negativelektrodenplatte gebildet ist, wobei eine vertikale Richtung der Negativelektrodenplatte oder der Positivelektrodenplatte mit einer nach oben gerichteten Fahne als Höhenrichtung der Negativelektrodenplatte oder der Positivelektrodenplatte bezeichnet wird.

9. Bleiakkumulator nach einem der Ansprüche 1 bis 8, wobei eine Fasermatte zwischen der Positivelektrodenplatte und der Negativelektrodenplatte eingefügt ist.

## Revendications

1. Batterie au plomb comprenant :
une plaque d'électrode positive ;
une plaque d'électrode négative ;
un séparateur interposé entre la plaque d'électrode positive et la plaque d'électrode négative ; et
une solution d'électrolyte,
dans laquelle
le séparateur comporte une nervure sur au moins le côté de la plaque d'électrode négative,
la plaque d'électrode négative comporte un matériau d'électrode négative,
le matériau d'électrode négative comporte des particules de carbone,
les particules de carbone comportent des premières particules de carbone ayant une taille de particule de moins de 32 µm, les premières particules de carbone sont des particules passant à travers un tamis ayant une ouverture nominale de 32 µm, comme spécifié dans la norme JIS Z 8801-1 : 2006, lorsqu'on tamise à l'humidité les particules de carbone selon la norme JIS Z8815 : 1994,
les premières particules de carbone comportent des secondes particules de carbone ayant une taille de particule plus petite qu'une taille de pore moyenne d2 du séparateur, la taille de pore moyenne du séparateur étant obtenue par porosimétrie au mercure, et
une teneur des premières particules de carbone dans le matériau de plaque négative est de 0,2 % en masse ou plus et de 2 % en masse ou moins.

2. Batterie au plomb selon la revendication 1, dans laquelle un rapport R = d1/d2 d'une taille de particule moyenne d1 des secondes particules de carbone, obtenu par, à partir d'une micrographie électronique des premières particules de carbone, le choix au hasard de 100 particules primaires ayant une taille de particule primaire plus petite que la taille de pore moyenne d2 du séparateur, en mesurant une taille maximum de chaque particule primaire et en calculant une valeur moyenne, à une taille de pore moyenne d2 du séparateur est de 0,8 ou moins.

3. Batterie au plomb selon la revendication 1 ou 2, dans laquelle la taille de particule moyenne d1 des secondes particules de carbone, obtenue par, à partir d'une micrographie électronique des premières particules de carbone, le choix au hasard de 100 particules primaires ayant une taille de particule primaire plus petite que la taille de pore moyenne d2 du séparateur, en mesurant une taille maximum de chaque particule primaire et en calculant une valeur moyenne, est de 10 nm ou plus et de 100 nm ou moins.

4. Batterie au plomb selon l'une quelconque des revendications 1 à 3, dans laquelle les secondes particules de carbone comportent du noir de charbon.

5. Batterie au plomb selon l'une quelconque des revendications 1 à 4, dans laquelle le séparateur a une forme de sac.

6. Batterie au plomb selon la revendication 5, dans laquelle le séparateur stocke la plaque d'électrode négative.

7. Batterie au plomb selon la revendication 5, dans laquelle le séparateur stocke la plaque d'électrode positive.

8. Batterie au plomb selon l'une quelconque des revendications 1 à 7, dans laquelle la nervure est formée le long d'une direction de hauteur de la plaque d'électrode négative, une direction verticale de la plaque d'électrode négative ou de la plaque d'électrode positive avec un ergot dirigé vers le haut étant rapportée comme la direction de hauteur de la plaque d'électrode négative ou de la plaque d'électrode positive.

9. Batterie au plomb selon l'une quelconque des revendications 1 à 8, dans laquelle un tapis de fibres est interposé entre la plaque d'électrode positive et la plaque d'électrode négative.
